# EUROPEAN PATENT APPLICATION

(11) **EP 4 509 729 A1**
(43) Date of publication of application: **19.02.2025**
(21) Application number: 23201279.9
(22) Date of filing: 02.10.2023
(51) Int. Cl.: F16B 13/06

(54) **MULTIFUNCTIONAL EXPANSION BOLT ASSEMBLY**

(30) Priority: 14.08.2023 TW 112130510
(71) Applicant: Su, Yu-Hsiang, Kaohsiung City (TW); Chen, I-Chun, Kaohsiung City (TW)
(72) Inventor: Su, Yu-Hsiang, Kaohsiung City (TW); Chen, I-Chun, Kaohsiung City (TW)
(74) Representative: Lang, Christian

(57) **Abstract**

A multifunctional expansion bolt assembly includes a sleeve (1), a screw rod (2), and a connecting member (3, 5, 6). The sleeve (1) includes a hollow body (11) formed between first and second ends (1a, 1b) of the sleeve (1). The second end (1b) has at least one open groove (12). The screw rod (2) includes a threaded portion (21) partially protruding beyond the first end (1a) of the sleeve (1). A second end (2b) of the screw rod (2) includes a conic portion (22) having a maximal diameter greater than an inner diameter of the second end (1b) of the sleeve (1). The screw rod (2) includes at least one engaging portion (23) having non-circular cross section and engaging with the open groove (12). The connecting member (3, 5, 6) includes an inner threading (31, 51, 61) in threading connection with a portion of the threaded portion (21).

## Description

### BACKGROUND OF THE INVENTION

### 1. Field of the Invention

The present invention relates to a multifunctional expansion bolt assembly and, more particularly, to an expansion bolt assembly capable of preventing idle rotation of the bolt and providing connection with various bolts or nuts.

### 2. Description of the Related Art

A conventional expansion bolt assembly includes a screw rod placed into a sleeve. The screw rod includes a conic head. The screw rod and the sleeve are inserted into a hole of a fixture. A threaded portion of the screw rod protrudes beyond a surface of the fixture. The protruded threaded portion can be in threading connection with a nut, such that a to-be-fixed object can be fixed to the fixture. The conventional expansion bolt assembly is generally used on an outer wall of a building, such as a sign or a frame for an air conditioner.

In use of the conventional expansion bolt assembly, during threading connection of the nut, since there is no anti-slipping member between the outer surface of the screw rod and the inner wall of the sleeve, the screw rod will rotate synchronously with the nut when applying a force to threadedly couple the nut with the threaded portion of the screw rod. Therefore, the nut cannot tighten the to-be-fixed object to the surface of the fixture. Accordingly, falling of the to-be-fixed object occurs from time to time.

Furthermore, the threaded portion of the screw rod of the conventional expansion bolt assembly protrudes beyond the surface of the fixture, such that the to-be-fixed object can only be fixed by the nut to the surface of the fixture. The fixing way cannot be changed and, thus, cannot fulfill different needs to achieve diverse fixing ways.

Furthermore, since the screw rod placed into the sleeve has a single size, when it is desired to change the protruding length of the screw rod or the diameter of the threaded portion, the worker must grind the protruded screw rod already inserted and then insert an expansion bolt assembly of a different specification to a location adjacent to the original screw rod, which is time-consuming. Furthermore, the newly inserted expansion bolt assembly is adjacent to the original already-inserted expansion bolt assembly, such that the newly inserted expansion bolt assembly may have insufficient adhesion.

Thus, it is necessary to improve the conventional expansion bolt assembly.

### SUMMARY OF THE INVENTION

To solve the above problem, it is an objective of the present invention to provide a multifunctional expansion bolt assembly, with at least one engaging portion provided between the outer surface of the screw rod and the inner wall of the sleeve, such that when the connecting member engages with the threaded portion of the screw rod, synchronous rotation of the screw rod and the connecting member can be prevented to allow easy installation.

It is another objective of the present invention to provide a multifunctional expansion bolt assembly which permits replacement of connecting members of different structures according to different needs of user, thereby achieving diverse fixing ways.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

A multifunctional expansion bolt assembly according to the present invention includes a sleeve, a screw rod, and a connecting member. The sleeve includes opposite first and second ends. A hollow body is formed between the first end and the second end of the sleeve. The second end of the sleeve includes at least one open groove. The at least one open groove has an opening on an end face of the second end of the sleeve. The screw rod includes opposite first and second ends. The first end of the screw rod includes a threaded portion. At least a portion of the threaded portion protrudes beyond the first end of the sleeve. The second end of the screw rod includes a conic portion having gradually increasing diameters towards an end face of the second end of the screw rod. The conic portion has a maximal diameter greater than an inner diameter of the second end of the sleeve. The screw rod includes at least one engaging portion. The screw rod has non-circular cross section at the at least one engaging portion. The at least one engaging portion engages with the at least one open groove. The connecting member includes opposite first and second ends. The second end of the connecting member has an inner threading in threading connection with a portion of the threaded portion of the screw rod. The first end of the connecting member has a connecting portion.

Thus, in the multifunctional expansion bolt assembly according to the present invention, since the second end of the sleeve has at least one open groove and the screw rod has at least one engaging portion engaged with the at least one open groove, relative rotation between the screw rod and the sleeve is prevented to thereby permit easy installation. Furthermore, the multifunctional expansion bolt assembly according to the present invention permits replacement of connecting members of different structures according to different needs in use, achieving diverse fixing ways.

In an example, the sleeve includes an outer periphery having a rough portion. Therefore, the sleeve and the inner wall of the fixture have a better adhesion effect therebetween.

In an example, the at least one engaging portion includes at least one protrusion protruding radially outward from an outer periphery of the screw rod. The number of the at least one protrusion is identical to the number of the at least one open groove. Therefore, the screw rod and the sleeve can be easily engaged, and relative rotation can be prevented.

In an example, the at least one protrusion extends to the conic portion. Therefore, each engaging portion in the form of a protrusion can engage with an associated open groove, thereby preventing relative rotation between the screw rod and the sleeve.

In an example, the cross section of the conic portion is a polygon. The number of sides of the polygon is identical to the number of the at least one open groove. Each corner of the polygon forms the engaging portion. Therefore, the engaging portion at each corner of the polygon can engage with an associated open groove to prevent relative rotation between the screw rod and the sleeve.

In an example, the first end of the connecting member has a driving portion. Therefore, the driving portion can be used to drive the connecting member to rotate, such that the multifunctional expansion bolt assembly can tightly engage with a hole of a fixture.

In an example, the multifunctional expansion bolt assembly may further include an external coupling member. The external coupling member includes a threaded portion and an outer connecting portion. The threaded portion of the external coupling member is in threading connection with the inner threading of the connecting member. The outer connecting portion is configured to couple with a to-be-fixed object. Therefore, the outer connecting portion may engage with a to-be-fixed object.

In an example, the connecting portion of the connecting member is in the form of a threading integrally formed with the inner threading. Therefore, the inner threading of the connecting member can directly be in threading connection with an external coupling member, and the external coupling member can engage with a to-be-fixed object.

In an example, the connecting portion of the connecting member is a screw hole having an inner threading, and an inner diameter of the connecting portion is different from a diameter of the inner threading of the connecting member. Therefore, different connecting members of different hole diameters can be replaced according to different needs in use, and the connecting portion can engage with a to-be-fixed object.

In an example, the connecting portion of the connecting member is a stud having an outer threading. Therefore, different connecting members of different outer diameters and different threadings can be replaced according to different needs in use to thereby fix a to-be-fixed object.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is an exploded, perspective view of a multifunctional expansion bolt assembly of a first embodiment according to the present invention.
FIG. 2 is a cross sectional view of the multifunctional expansion bolt assembly of the first embodiment according to the present invention.
FIG. 3 is a cross sectional view illustrating fixing of the multifunctional expansion bolt assembly of the first embodiment according to the present invention to a to-be-fixed object.
FIG. 4 is a perspective view of another embodiment of a screw rod according to the present invention.
FIG. 5 is a cross sectional view illustrating coupling of the multifunctional expansion bolt assembly of the first embodiment according to the present invention and an external coupling member.
FIG. 6 is a cross sectional view of a multifunctional expansion bolt assembly of a second embodiment according to the present invention.
FIG. 7 is a cross sectional view of a multifunctional expansion bolt assembly of a third embodiment according to the present invention.

When the terms "front", "rear", "left", "right", "up", "down", "top", "bottom", "inner", "outer", "side", and similar terms are used herein, it should be understood that these terms have reference only to the structure shown in the drawings as it would appear to a person viewing the drawings and are utilized only to facilitate describing the invention, rather than restricting the invention.

### DETAILED DESCRIPTION OF THE INVENTION

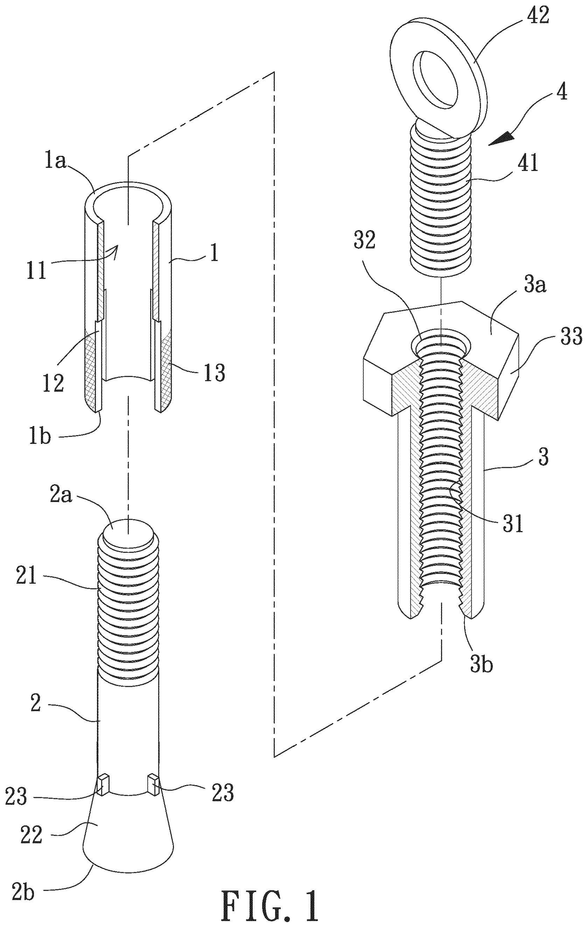

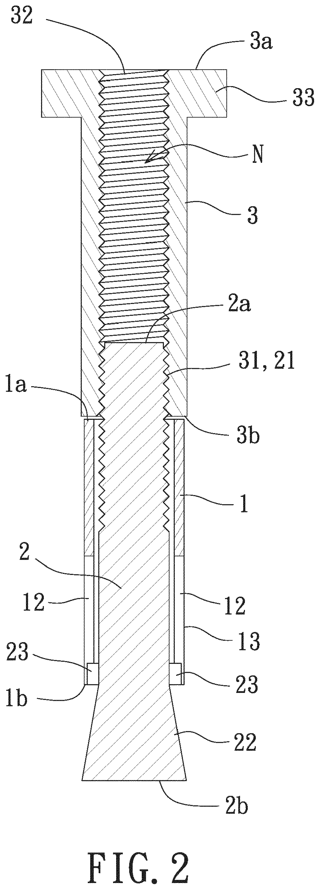

With reference to FIGS. 1 and 2, a multifunctional expansion bolt assembly of a first embodiment according to the present invention includes a sleeve 1, a screw rod 2, and a connecting member 3. The screw rod 2 extends through a hollow body 11 of the sleeve 1. The connecting member 3 can be in threading connection with the screw rod 2.

The sleeve 1 includes opposite first and second ends 1a and 1b. The hollow body 11 is formed between the first end 1a and the second end 1b of the sleeve 1. The second end 1b includes at least one open groove 12. The at least one open groove 12 has an opening on an end face of the second end 1b of the sleeve 1, such that the second end 1b of the sleeve 1 may expand and deform. In this embodiment, the sleeve 1 includes four open grooves 12 which are equi-angularly disposed on the second end 1b to permit easier expansion and deformation of the sleeve 1 and more uniform deformation of the sleeve 1. Preferably, the outer surface of the sleeve 1 has a rough portion 13 which may be in the form of embossment, protrusive ridges, etc., such that the sleeve 1 and an inner wall of a fixture may have better adhesion therebetween.

The screw rod 2 includes opposite first and second ends 2a and 2b. The first end 2a of the screw rod 2 includes a threaded portion 21, such that the screw rod 2 can extend through the hollow body 11 of the sleeve 1, and at least a portion of the threaded portion 21 protrudes beyond the first end 1a of the sleeve 1. The second end 2b of the screw rod 2 includes a conic portion 22 having gradually increasing diameters towards an end face of the second end 2b of the screw rod 2. The conic portion 22 has a maximal diameter greater than an inner diameter of the second end 1b of the sleeve 1. The cross section of the conic portion 22 may be polygonal or circular. The present invention is not limited in this regard. The screw rod 2 includes at least one engaging portion 23, and the cross-section of the screw rod 2 at the at least one engaging portion 23 is non-circular. The at least one engaging portion 23 can engage with the at least one open groove 12.

As shown in FIGS. 1 and 2, both the cross section of the conic portion 22 and the cross section of the inner wall of the sleeve 1 are circular. The at least one engaging portion 23 may be in the form of at least one protrusion protruding radially outward from an outer periphery of the screw rod 2, and the at least one engaging portion 23 in the form of a protrusion may extend to the conic portion 22 (not shown). The present invention is not limited in this regard. Preferably, the number of the at least one protrusion is identical to a number of the at least one open groove 12, such that each engaging portion 23 in the form of a protrusion can engage with an associated open groove 12, thereby preventing relative rotation between the screw rod 2 and the sleeve 1.

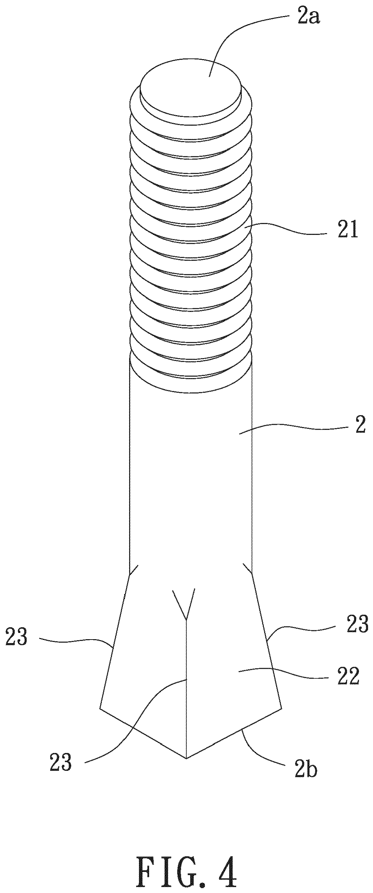

Alternatively, in another embodiment of the screw rod 2 shown in FIG. 4, the cross section of the conic portion 22 is polygonal, and the number of the sides of the polygon is the same as the number of the open grooves 12. Each corner of the polygon forms an engaging portion 23 which is aligned with an associated open groove 12. Thus, each engaging portion 23 at the corner can engage with an associated open groove 12 to prevent relative rotation between the screw rod 2 and the sleeve 1, which can be appreciated by one having ordinary skill in the art, and detail description is not set forth to avoid redundancy.

Still referring to FIGS. 1 and 2, the connecting member 3 includes opposite first and second ends 3a and 3b. The second end 3b of the connecting member 3 has an inner threading 31 in threading connection with a portion of the threaded portion 21 of the screw rod 2. The first end 3a of the connecting member 3 has a connecting portion 32. In this embodiment, the connecting portion 32 of the connecting member 3 is in the form of a threading integrally formed with the inner threading 31. Namely, the connecting member 3 may be in partial threading connection with the threaded portion 21 of the screw rod 2 protruding beyond the sleeve 1 by the inner threading 31 of the second end 3b, such that the inner threading 31 of the connecting member 3 has a section **N** not in threading connection with the screw rod 2, and the section **N** may be in threading connection with an external coupling member 4. Preferably, the first end 3a of the connecting member 3 has a driving portion 33 which may be in the form of a nut.

In this embodiment, the multifunctional expansion bolt assembly according to the present invention may further include an external coupling member 4. The external coupling member 4 includes a threaded portion 41 and an outer connecting portion 42. The threaded portion 41 may be in threading connection with the inner threading 31 of the connecting member 3. Namely, the threaded portion 41 may be in threading connection with the above section **N** not in threading connection with the screw rod 2 (as shown in FIG. 2), and the outer connecting portion 42 may couple with a to-be-fixed object.

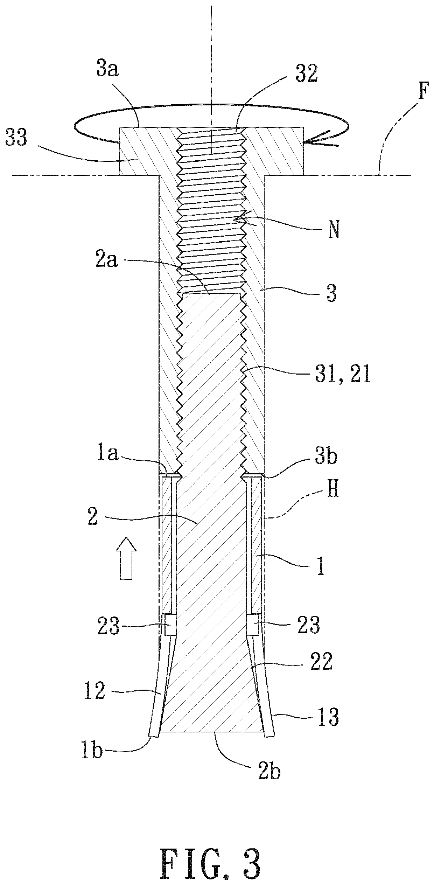

FIG. 3 shows an example of use of the multifunctional expansion bolt assembly of the first embodiment according to the present invention. A fixture **F** is drilled to form a hole **H,** and the second ends 1b, 2b, 3b of the sleeve 1, the screw rod 2, and the connecting member 3 are placed into the hole **H.** The connecting member 3 is rotated via the driving portion 33 to move the conic head 22 of the screw rod 2 upward, as indicated by the arrow head. Since the engaging portions 23 of the screw rod 2 respectively engage with the open grooves 12, the conic portion 22 urges the second end 1b of the sleeve 1 to expand radially outward until the connecting member 3 cannot be rotated any more, thereby securely fixing the sleeve 1 in the hole **H.**

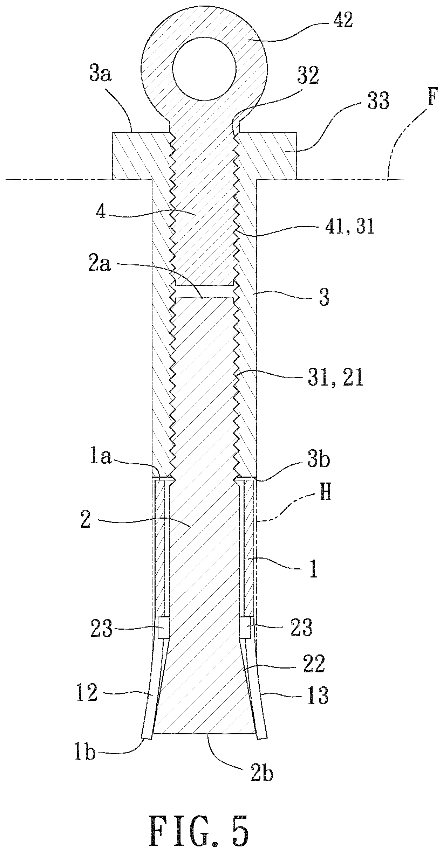

With reference to FIG. 5, when the sleeve 1 is securely fixed in the hole **H,** the section **N** of the connecting member 3 not in threading connection with the screw rod 2 can be in threading connection with the threaded portion 41 of the external coupling member 4, such that the external coupling member 4 can fix a to-be-fixed object to the fixture **F.**

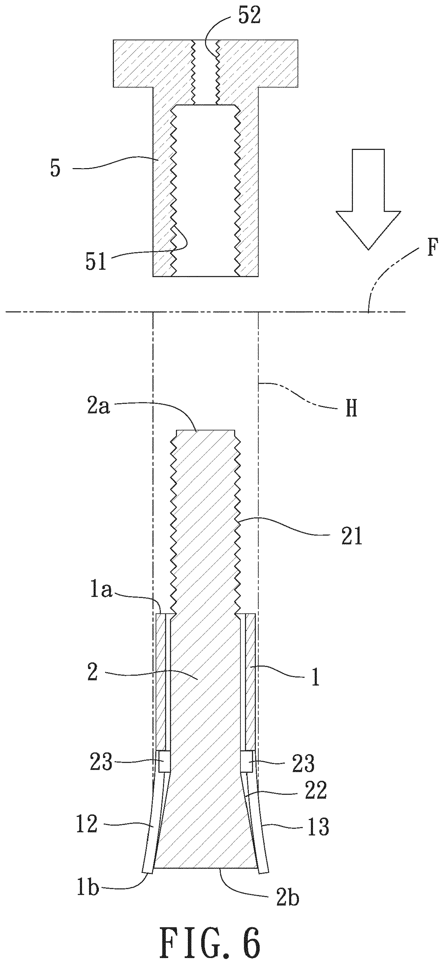

With reference to FIG. 6 illustrating a second embodiment of the connecting member according to the present invention, a worker may remove the connecting member 3 and the external coupling member 4 and then engage another connecting member 5 with the screw rod 2. The connecting member 5 includes an inner threading 51 and a connecting portion 52. The inner threading 51 can be in threading connection with the threaded portion 21 of the screw rod 2, and the connecting member 5 may have different connecting portions 52 for engaging with a to-be-fixed object. In this embodiment, the connecting portion 52 may be in the form of a screw hole having an inner threading, and a diameter of the connecting portion 52 in the form of a screw hole may have various sizes. Therefore, connecting members 5 of different hole diameters may be available to permit replacement according to different needs in use. In addition, in this embodiment, the inner diameter of the connecting portion 52 is different from the diameter of the inner threading 51 of the connecting member 5. The difference may exist in the major diameter, the minor diameter or the pitch of the threadings, according to different needs in use.

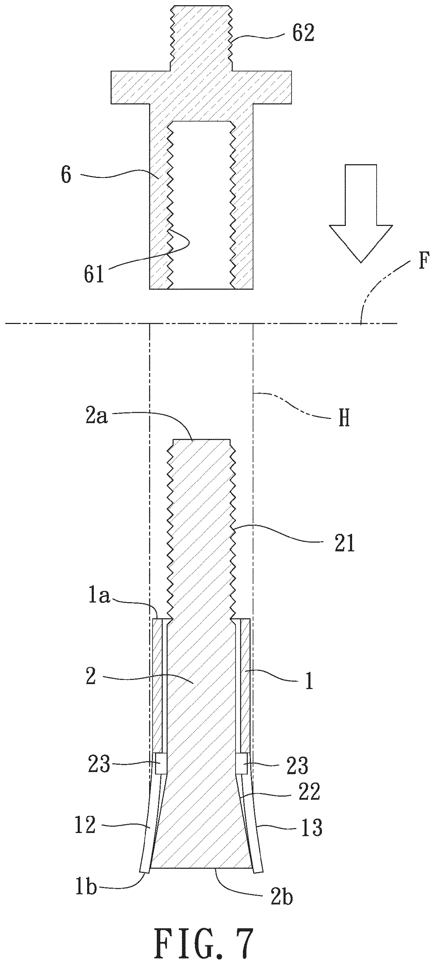

With reference to FIG. 7 illustrating a third embodiment of the connecting member according to the present invention, the worker may remove the connecting member 3 and the external coupling member 4 and then engage another connecting member 6 with the screw rod 2. The connecting member 6 includes an inner threading 61 and a connecting portion 62. The inner threading 61 can be in threading connection with the threaded portion 21 of the screw rod 2, and the connecting member 6 may have different connecting portions 62 for engaging with a to-be-fixed object. In this embodiment, the connecting portion 62 may be in the form of a stud having an outer threading, and the outer diameter and threading of the connecting portion 62 in the form of a stud may have various sizes. Therefore, different connecting members of different outer diameters and different threadings can be replaced according to different needs in use to thereby fix a to-be-fixed object.

In view of the foregoing, in the multifunctional expansion bolt assembly according to the present invention, since the second end of the sleeve has at least one open groove and the screw rod has at least one engaging portion engaged with the at least one open groove, relative rotation between the screw rod and the sleeve is prevented to thereby permit easy installation. Furthermore, the multifunctional expansion bolt assembly according to the present invention permits replacement of connecting members of different structures according to different needs in use, achieving diverse fixing ways.

## Claims

1. A multifunctional expansion bolt assembly, **characterized in** comprising:
a sleeve (1) including opposite first and second ends (1a, 1b), wherein a hollow body (11) is formed between the first end (1a) and the second end (1b) of the sleeve (1), wherein the second end (1b) of the sleeve (1) includes at least one open groove (12), and wherein the at least one open groove (12) has an opening on an end face of the second end (1b) of the sleeve (1);
a screw rod (2) including opposite first and second ends (2a, 2b), wherein the first end (2a) of the screw rod (2) includes a threaded portion (21), wherein at least a portion of the threaded portion (21) protrudes beyond the first end (1a) of the sleeve (1), wherein the second end (2b) of the screw rod (2) includes a conic portion (22) having gradually increasing diameters towards an end face of the second end (2b) of the screw rod (2), wherein the conic portion (22) has a maximal diameter greater than an inner diameter of the second end (1b) of the sleeve (1), wherein the screw rod (2) includes at least one engaging portion (23), wherein the screw rod (2) has non-circular cross section at the at least one engaging portion (23), and wherein the at least one engaging portion (23) engages with the at least one open groove (12); and
a connecting member (3, 5, 6) including opposite first and second ends (3a, 3b), wherein the second end (3b) of the connecting member (3, 5, 6) has an inner threading (31, 51, 61) in threading connection with a portion of the threaded portion (21) of the screw rod (2), and wherein the first end (3a) of the connecting member (3, 5, 6) has a connecting portion (32, 52, 62).

2. The multifunctional expansion bolt assembly as claimed in claim 1, **characterized in that** the sleeve (1) includes an outer periphery having a rough portion (13).

3. The multifunctional expansion bolt assembly as claimed in claim 1, **characterized in that** the at least one engaging portion (23) includes at least one protrusion protruding radially outward from an outer periphery of the screw rod (2), and wherein a number of the at least one protrusion is identical to a number of the at least one open groove (12).

4. The multifunctional expansion bolt assembly as claimed in claim 3, **characterized in that** the at least one protrusion extends to the conic portion (22).

5. The multifunctional expansion bolt assembly as claimed in claim 1, **characterized in that** the cross section of the conic portion (22) is a polygon, wherein a number of sides of the polygon is identical to a number of the at least one open groove (12), and wherein each corner of the polygon forms the engaging portion (23).

6. The multifunctional expansion bolt assembly as claimed in claim 1, **characterized in that** the first end (3a) of the connecting member (3) has a driving portion (33).

7. The multifunctional expansion bolt assembly as claimed in claim 1, **characterized in** further comprising an external coupling member (4), wherein the external coupling member (4) includes a threaded portion (41) and an outer connecting portion (42), wherein the threaded portion (41) of the external coupling member (4) is in threading connection with the inner threading (31) of the connecting member (3), and wherein the outer connecting portion (42) is configured to couple with a to-be-fixed object.

8. The multifunctional expansion bolt assembly as claimed in claim 1, **characterized in that** the connecting portion (32) of the connecting member (3) is in a form of a threading integrally formed with the inner threading (31).

9. The multifunctional expansion bolt assembly as claimed in claim 1, **characterized in that** the connecting portion (52) of the connecting member (5) is a screw hole having an inner threading, and wherein an inner diameter of the connecting portion (52) is different from a diameter of the inner threading (51) of the connecting member (5).

10. The multifunctional expansion bolt assembly as claimed in claim 1, **characterized in that** the connecting portion (62) of the connecting member (6) is a stud having an outer threading.
